Europäisches Patentamt

European Patent Office

Office européen des brevets

(11) Veröffentlichungsnummer: **0 316 545 B1**

(19)

(12) **EUROPÄISCHE PATENTSCHRIFT**

(45) Veröffentlichungstag der Patentschrift: **01.04.92**

(51) Int. Cl.⁵: **B60H 3/02**

(21) Anmeldenummer: **88115771.3**

(22) Anmeldetag: **24.09.88**

(54) **Klimaanlage.**

(30) Priorität: **20.11.87 DE 3739372**

(43) Veröffentlichungstag der Anmeldung:
**24.05.89 Patentblatt 89/21**

(45) Bekanntmachung des Hinweises auf die
Patenterteilung:
**01.04.92 Patentblatt 92/14**

(84) Benannte Vertragsstaaten:
**DE ES FR GB IT SE**

(56) Entgegenhaltungen:

PATENT ABSTRACTS OF JAPAN, Band 8, Nr.
280 (M-347)[1717], 21. Dezember 1984; & JP-
A-59 149 809 (NIPPON DENSO K.K.)
27-08-1984

PATENT ABSTRACTS OF JAPAN, Band 9, Nr.
92 (M-373)[1815], 20. April 1985; & JP-A-59
216 719 (MATSUSHITA DENKI SANGYO K.K.)
06-12-1984

PATENT ABSTRACTS OF JAPAN, Band 10,
Nr. 295 (M-523)[2351], 7. Oktober 1986; & JP-
A-61 110 613 (NIPPON DENSO CO., LTD)
28-05-1986

(73) Patentinhaber: **Behr GmbH & Co.**
**Mauserstrasse 3**
**W-7000 Stuttgart 30(DE)**

(72) Erfinder: **Kampf, Hans, Dipl-Ing.**
**Eugen-Ruoff-Strasse 23**
**W-7054 Korb(DE)**
Erfinder: **Lochmahr, Karl, Dipl-Ing.(FH)**
**Aschmannstrasse 33**
**W-7143 Vaihingen/Enz(DE)**

(74) Vertreter: **Dreiss, Uwe, Dr. jur. Dipl.-Ing. M.Sc.**
**et al**
**Patentanwälte Dreiss, Hosenthien & Fuhlen-**
**dorf Gerokstrasse 6**
**W-7000 Stuttgart 1(DE)**

PATENT ABSTRACTS OF JAPAN, Band 12, Nr. 14 (M-659)[2861], 16.Januar 1988; & JP-A-62 175 211 (AUTOMOB ANTIPOLLUT & SAF RES CENTER) 31-07-1987 (Kat. A)

PATENT ABSTRACTS OF JAPAN, Band 10, Nr. 118 (M-475)[2175], 2.Mai 1986; & JP-A-60 248 422 (MATSUSHITA DENKI SANGYO K.K.) 09-12-1985

PATENT ABSTRACTS OF JAPAN, Band 9, Nr. 264 (M-423)[1987], 22. Oktober 1985; & JP-A-60 110 518 (MATSUSHITA DENKI SANGYO K.K.) 17-06-1985

PATENT ABSTRACTS OF JAPAN, Band 84, Nr. 12 (M-269)[1449], 19. Januar 1984; & JP-A-58 174 018 (DIESEL KIKI K.K.) 13-10-1983

PATENT ABSTRACTS OF JAPAN, Band 10, Nr. 18 (M-448)[2075], 24. Januar 1986; & JP-A-60 176 809 (MITSUBISHI JUKOGYO K.K.) 10-09-1985

## Beschreibung

Die Erfindung betrifft eine Klimaanlage für ein Kraftfahrzeug mit zur Entfeuchtung geeigneten Einrichtungen im Luftkanal, die von einem Mikrocomputer steuerbar sind, an den von Sensoren gemessene Werte für Außentemperatur, Innentemperatur und Innenfeuchte gelangen.

Eine derartige Klimaanlage ist aus der EP-B1-0 043 668 bekannt. Es handelt sich um eine Klimaanlage für einen Lastkraftwagen mit Fahrerkabine und einem Raum hinter dem Fahrersitz. Die klimatisierte Luft kann, falls der Raum hinter dem Fahrersitz besetzt ist, in diesen umgelenkt werden. Dann findet auch eine Befeuchtung dieser Luft statt, falls die gemessene Innenfeuchte einen bestimmten Sollwert unterschreitet, um das Klima in dem Raum hinter der Fahrerkabine für die sich dort aufhaltende Person erträglicher zu machen. Dabei wird aber keine Rücksicht darauf genommen, daß die Scheiben nicht beschlagen dürfen. Vielmehr muß bei entsprechend niedriger Temperatur mit dem Beschlagen der Scheiben gerechnet werden. Bei dieser bekannten Klimaanlage ist auch, und zwar vom Mikrocomputer gesteuert, ein Gebläse vorgesehen. Dies ist im Prinzip eine Einrichtung, die zur Herabsetzung der Feuchte geeignet ist. Das Gebläse wird jedoch bei der bekannten Einrichtung nicht in Abhängigkeit von der Innenfeuchte angesteuert (vgl. EP-B1-0 043 668, Spalte 5, Zeile 53).

Die DE-A-32 15 802 zeigt eine Steuerung zur Regelung der Heckscheibenheizung eines Kraftfahrzeuges. Damit kann ggf. die Heckscheibe entfeuchtet werden.

Die DE-B-35 04 156 zeigt eine Klimaanlage, bei der ein Sensor auf der Innenseite der Fahrzeugscheibe die Kondensation von Wasserdampf erfaßt und bei Beschlagen der Fahrzeugscheibe einen Ventilator einschaltet.

Aus der JP-A-59-149809 ist eine Innenraumheizung für Kraftfahrzeuge bekannt geworden, bei der Sensoren für die Innenraumtemperatur, die innenraumseitige Temperatur der Scheibe und die Taupunkttemperatur am Spiegel oder einem ähnlichen Gegenstand im Inneren vorgesehen sind. Die mit Hilfe dieser Sensoren abgeleiteten Signale werden in einem Mikrocomputer mit einem Bezugssignal verglichen. Je nach Ergebnis des Vergleiches werden das Gebläse oder ein Schrittmotor zu Einstellung des Anteils erhitzer Luft im Luftkanal betätigt. Nachteilig daran ist - wie bei der DE-PS 35 04 156 -, daß die Entfeuchtung erst einsetzt, wenn bereits ein Betauen eingesetzt hat und mit Hilfe des Sensors festgestellt worden ist. Außerdem ist diese Anordnung insofern aufwendig, als zusätzlich zu den bereits für die Klimaanlage erforderlichen Meßgeräten bzw. Sensoren noch weitere Sensoren an der Scheibe und am Spiegel erforderlich sind.

Bei der JP-A-62-175211 sind ein Frostsensor, ein Innenfeuchtigkeitssensor, ein Innentemperatursensor, ein Außentemperatursensor und ein Sensor für die Temperatur der Luft an der Lufteintrittsöffnung vorgesehen. In einem Mikrocomputer wird die vom Feuchtigkeitssensor gemessene Innenraumfeuchte mit einem vorgegebenen Referenzbereich verglichen. In Abhänigkeit von diesem Vergleich werden zwei Lufteinlaßklappen so gesteuert, daß ein als unkomfortabel empfundenes Absinken der Feuchte und der Gebläsetemperatur vermieden wird.

Es sind jetzt noch keine Klimaanlagen bekannt geworden, bei denen die relative Luftfeuchte im Innenraum des Kraftfahrzeugs derart bestimmt wird, daß ein Beschlagen der Scheiben vermieden wird.

Demgemäß ist es **Aufgabe** der Erfindung, eine Klimaanlage der eingang genannten Art so auszubilden, daß damit eine Feuchtkontrolle im Innenraum eine Kraftfahrzeug derart erfolgen kann, daß ein Beschlagen der Scheiben vermieden wird. Im Sinner einer Unteraufgabe soll ferner erreicht werden, daß dennoch die Feuchtigkeit auf einem als angenehm empfundenen Wert gehalten wird.

Erfindungsgemäß wird diese Aufgabe dadurch **gelöst,** daß der Mikrocomputer aus den Werten für Außentemperatur, Innentemperatur und Innenfeuchte die Grenzefeuchte als Verhältnis des Sättigungsdampfdrucks innen an der Scheibe und des Sättigungsdampfdrucks der Innenluft berechnet und, falls die Differenz von Grenzfeuchte und Innenfeuchte einen bestimmten Wert unterschreitet, die Einrichtungen zur Entfeuchtung betätigt.

Als Einrichtungen zur Entfeuchtung kommen z.B. das im Luftkanal angeordnete Gebläse, die Entfrosterklappe des Luftkanals, ein im Luftkanal angeordneter und zu einer im Kraftfahrzeug vorhandenen Kälteanlage gehörender Verdampfer oder ein im Luftkanal angeordneter vom Kühlmittelkreislauf für den Motor gespeister Wärmetauscher in Frage. Diese Einrichtungen werden dann in Abhänigkeit von der Differenz von Grenzfeuchte und Innenfeuchte über den genannten Mikrocomputer angesteuert.

Eine vorteilhafte Weiterbildung der Erfindung sieht vor, daß der Mikrocomputer Einrichtungen zur Befeuchtung betätigt, falls die Innenfeuchte einen vorbestimmten Innenfeuchte-Sollwert unterschreitet. Dabei ist der Innenfeuchte-Sollwert so bestimmt, daß er unterhalb des Wertes der Innenfeuchte liegt, oberhalb dessen die Entfeuchtung erfindungsgemäß einsetzt. Auf jeden Fall wird aber der Innenfeuchte-Sollwert auf 50 % begrenzt, weil ein höherer Wert als unangenehm empfunden wird.

Die Ermittlung des Sättigungsdampfdrucks innen an der Scheibe und des Sättigungsdampfdruckes der Innenluft kann auf verschiedene Art und Weise erfolgen. Der Sättigungsdampfdruck kann z.B. aus den Temperaturen ermittelt werden, wobei die Temperatur der Scheibe entweder direkt gemessen oder aus Innentemperatur, Außentemperatur und Geschwindigkeit berechnet werden kann.

Eine Befeuchtung kann entweder durch Öffnen der Umluftklappen in Abhängigkeit der Differenz von Innenfeuchte-Sollwert und Innenfeuchte oder durch Steuerung der Wassermenge einer separat vorgesehenen Befeuchtungseinrichtung, bspw. eines Zerstäubers, erfolgen.

Ein Ausführungsbeispiel der Erfindung und ihrer vorteilhaften Weiterbildungen wird im folgenden anhand der beigefügten Zeichnungen erläutert. Es stellen dar:

Figur 1     einen Flußplan zur Berechnung der Grenzfeuchte;

Figur 2     einen Flußplan zur Steuerung von Be- und Entfeuchtung;

Figur 3     ein Luftkanal mit den verschiedenen Einrichtungen zur Be- und Entfeuchtung.

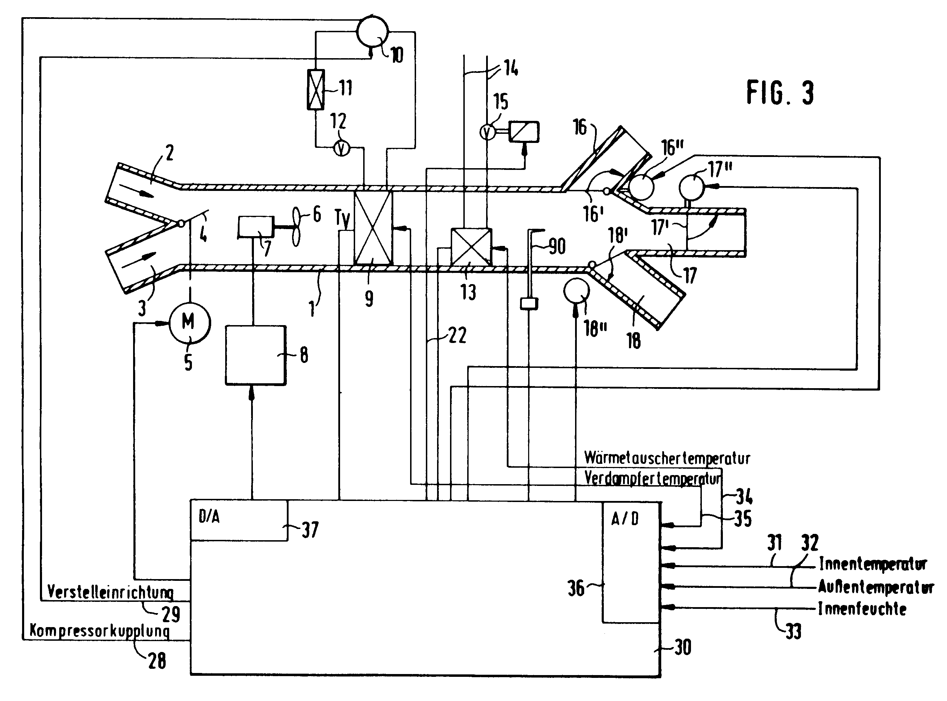

Die Klimaanlage weist, wie aus Figur 3 ersichtlich, einen Luftkanal 1 auf. Die Luftzufuhr erfolgt durch Schächte 2 oder 3. Dabei dient der Schacht 2 zur Zufuhr von Umluft, der Schacht 3 zur Zufuhr von Frischluft. Die Steuerung erfolgt über eine Klappe 4, die von einem Stellmotor 5 betätigt wird. In Strömungsrichtung hinter der Klappen 4 ist ein Gebläse 6 angeordnet, das von einem Motor 7 angetrieben wird. Die Ansteuerung der Motors 7 erfolgt über eine Steuereinrichtung 8. In Strömungsrichtung hinter dem Gebläse 6 ist der Verdampfer 9 einer Kälteanlage angeordnet, die in bekannter Weise ferner einen Kompressor 10, einen Kondensator 11 und ein Expansionsventil 12, sowie die entsprechenden Kühlmittelleitungen aufweist. In Richtung der Luftströmung hinter dem Verdamper 9 ist im Luftkanal 1 ein Wärmetauscher 13 angeordnet, der über Leitungen 14 mit dem Kühlmittelkreislauf des Motors des Kraftfahrzeugs verbunden ist. Die Ansteuerung des Wärmetauschers 1 3 erfolgt über ein Taktventil 15. Der Luftkanal 1 endet in Schächte 16, 17, 18. Dabei ist der Schacht 16 den Entfrosteröffnungen an der Windschutzscheibe, der Schacht 17 den Belüftungsöffnungen am Armaturenbrett, und der Schacht 18 dem Fußraum des Kraftfahrzeugs zugeordnet. Die Menge der klimatisierten Luft, die durch die einzelnen Schächte austritt, wird durch die Stellung von Klappen 16', 17' 18' bestimmt, die durch Stellmotoren 16" 17" 18" gestellt werden.

Die Ansteuerung der Stellmotoren für die Klappen 4, 16' 17',18' des Motors 7, des Taktventiles 15, der Verdampfertemperatur und des Wärmetauschers, sowie ferner der Kompressorkupplung (Leitung 28) und einer Verstelleinrichtung des Kompressors (Leitung 29), erfolgt durch den Mikrocomputer 30.

An den Mikrocompter 30 gelangen ferner die von Sensoren ermittelten Werte für die Innentemperatur im Kraftfahrzeug, die Außentemperatur und die Innenfeuchte. Diese Sensoren werden durch die Leitungen 31, 32, 33 symbolisiert. Über die Leitung 34 gelangt an den Mikrocomputer die tatsächliche Temperatur des Wärmetauschers 13, über Leitung 35 die tatsächliche Temperatur des Verdampfers 9. Die Umsetzung der analog anfallenden Werte erfolgt in einem A/D-Wandler 36. Umgekehrt erfolgt die Umsetzung der vom Mikrocomputer ermittelten Werte zur Steuerung des Motors 7 und des Gebläses 6 in einem D/A-Wandler 37.

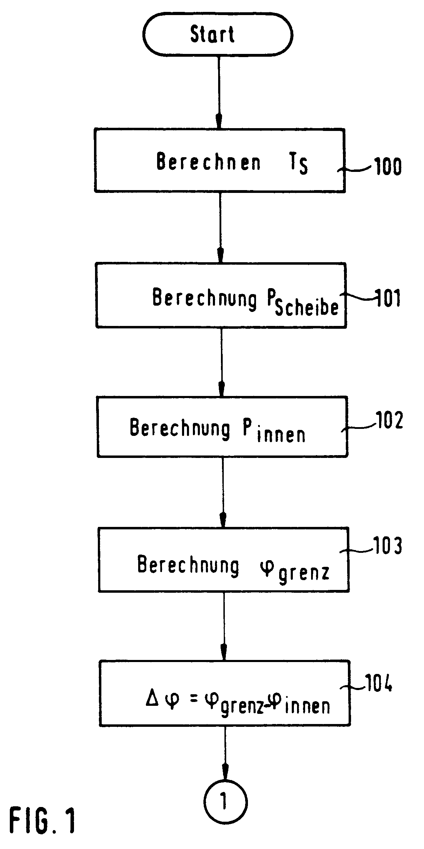

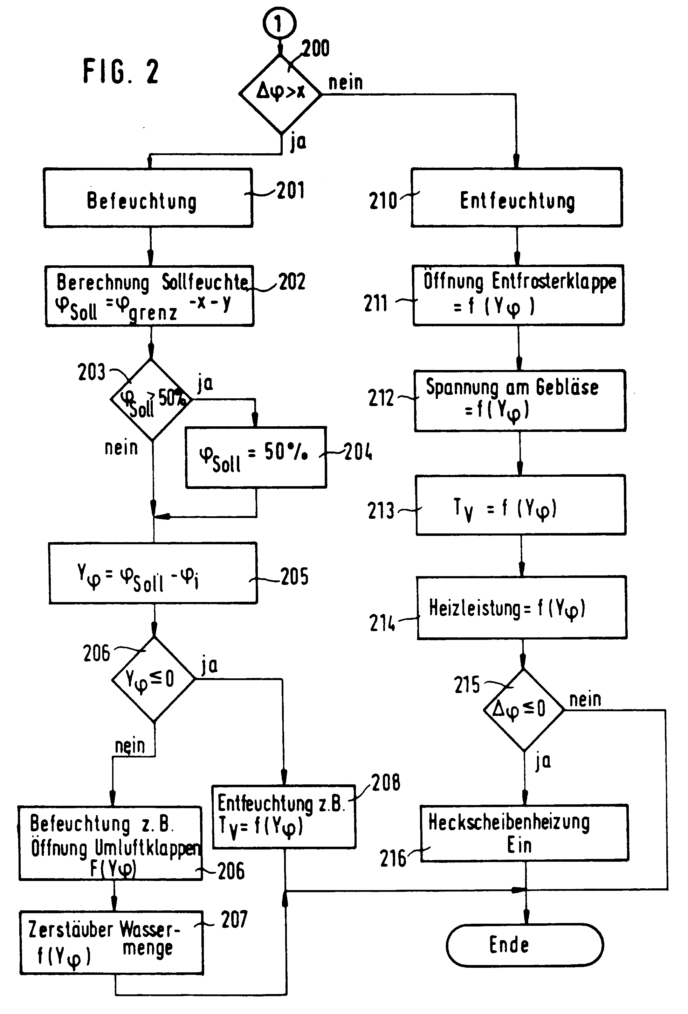

Die Arbeitsweise des Mikrocomputers 30 wird im folgenden anhand der Flußpläne nach Figur 1 und 2 erläutert.

Nach dem Start erfolgt im Schritt 100 die Berechnung der Temperatur der Scheibe $T_s$, sofern sie nicht direkt als Ergebnis einer Messung vorliegt (dann ist eine entsprechende Messung durch einen Sensor in Figur 3 noch vorzusehen). Die Berechnung erfolgt als Funktion der Innentemperatur $T_i$ der Außentemperatur $T_a$ und der Geschwindigkeit v wie folgt:

$$T_s = f(T_i, T_a, v)$$
$$= (1 - a) T_i + a T_a.$$

Dabei ist

$$a = \frac{0{,}359 \; v^{0,8}}{1{,}143 + 0{,}382 \; v^{0,8}}$$

für $v \geq 10$ km/h und $a = a \, (v = 10$ km/h$)$ für $v < 10$ km/h.

Aus $T_s$ wird der Sättigungsdampfdruck $P_s$ der Scheibe innen ermittelt. Dies erfolgt nach bekannten thermodynamischen Gesetzen; es braucht also hier nicht weiter erläutert zu werden. Ebenso wird aus $T_i$ der Sättigungsdampfdruck innen $P_i$ bestimmt. Dies erfolgt in den Schritten 101 und 102. Aus diesen beiden Werten wird nun im Schritt die Grenzfeuchte $\phi_{grenz}$ errechnet, und zwar wie folgt:

$$\phi_{grenz} = \frac{P_s}{P_i} \cdot 100 \; \%.$$

Dabei ergeben sich je nach Jahreszeit und in Abhängigkeit der gemessenen Parameter verschiedene Werte, im Herbst z.B. 70 %, im Winter z.B. 40

%. Diese "Grenzfeuchte" ist der für die nachfolgende Regelung maßgebende Wert. Ein höherer Wert der

Innenraumfeuchte soll nicht vorliegen, da sonst die Scheiben betauen.

Im Schritt 104 erfolgt die Ermittlung der "Feuchtedifferenz" $\Delta\phi$. Sie ist die Differenz der Grenzfeuchte $\phi_{grenz}$ und der Innenfeuchte $\phi_i$. Diese Feuchtedifferenz $\Delta\phi$ ist Ausgangspunkt der Regelung nach Figur 2.

Je nachdem, ob die Feuchtedifferenz $\Delta\phi$ größer oder kleiner als ein bestimmter aus Sicherheitsgründen zu haltender fahrzeugspezifischer Abstand x (der bspw. 12 % betragen kann) ist, erfolgt eine Befeuchtung (linke Seite des Flußplans nach Figur 2) oder eine Entfeuchtung (rechte Seite des Flußlans nach Figur 2). Die Entscheidung erfolgt im Schritt 200.

Ist nun $\Delta\phi > x$, so erfolgt eine Befeuchtung, wie in Schritt 201 dargestellt. Es wird dann im Schritt 202 ein Sollwert $\phi_{soll}$,die Sollfeuchte bestimmt, und zwar derart, daß

$$\phi_{soll} = \phi_{grenz} - x - y$$

ist, wobei y die Regelabweichung eines Proportionalreglers, z.B. 5 % sein kann. Um zu gewährleisten, daß die Sollfeuchte $\phi_{soll}$ aber keinesfalls mit über 50 % festgestellt wird, erfolgt in Schritt 203 eine Prüfung, ob die im Schritt 202 ermittelte Sollfeuchte größer als 50 % ist. Ist dies der Fall, so wird die Sollfeuchte in Schritt 204 auf 50 % festgesetzt. Dies erfolgt deshalb, weil relative Feuchten von mehr als 50 % unangenehm empfunden werden.

Im Schritt 205 werden nun aus der entweder in Schritt 202 oder in Schritt 204 bestimmten Sollfeuchte die Regelgröße $y_\phi$ wie folgt bestimmt:

$$y_\phi = \phi_{grenz} - \phi_i.$$

Dies erfolgt in Schritt 205. In Schritt 206 wird geprüft, ob die derart ermittelte Regelgröße $y_\phi$ kleiner gleich 0 oder größer 0 ist. Ist die Größe nicht kleiner oder gleich 0, dann erfolgt, wie in Schritt 206 dargestellt ein Befeuchtung. Dies kann z.B. durch Stellung der Klappe 4 derart erfolgen, daß die Umluftzufuhr über Schacht 2 freigegeben und die Frischluftzufuhr über Schacht 3 gesperrt wird, wobei der Öffnungsgrad als Funktion der Stellgröße $y_\phi$ erfolgt. Zusätzlich kann, falls eine Befeuchtungseinrichtung, z.B. ein Zerstäuber 90, verhanden ist, die Wassermenge, ebenfalls als Funktion der Stellgröße $y_\phi$ zudosiert werden.

Stellt sich in Schritt 206 raus, daß die Stellgröße $y_\phi$ kleiner oder gleich 0 ist, d.h. daß zuviel befeuchtet worden ist, dann müssen auf jeden Fall die Befeuchtungseinrichtungen ausgeschaltet und etwas entfeuchtet werden, im Ausführungsbeispiel durch eine ggf. geringfügige Erniedrung der Temperatur des Verdampfers 9, also durch entsprechende Steuerung von $T_v$ als Funktion der Stellgröße $y_\phi$ .

Stellt sich in Schritt 200 heraus, daß der Sicherheitsabstand zwischen Grenzfeuchte und tatsächlich gemessener Innenfeuchte unterschritten wird, ist als $\Delta\phi$ kleiner/gleich x, so werden, wie bei 210 gezeigt Maßnahmen gegen eine Betauung der Scheiben und Entfeuchtungsmaßnahmen eingeleitet. Dies ist möglich durch Öffnung der Klappe 16$'$ für die Entfrosterdüsen (Schacht 16), durch Erhöhung der am Motor 7 für das Gebläse 6 anliegenden Spannung, durch Absenkung der Temperatur des Verdampfers oder durch Erhöhung der Heizleistung am Wärmetauscher 13 durch Erhöhung des Taktes, mit dem das Taktventil 15 getaktet wird. Alle diese Ansteuerungen können als Funktion der Feuchtedifferenz $\Delta\phi$ erfolgen. Die entsprechenden Regelschritte sind mit 211 bis 214 bezeichnet. Anschließend erfolgt im gleichen Durchlauf des Programms die Prüfung, ob die Feuchtedifferenz kleiner oder gleich 0 ist. Dieses erfolgt im Schritt 215. Ist $\Delta\phi$ kleiner als 0, dann wird noch, wie bei 216 dargestellt, die Heckscheibenheizung eingeschaltet.

Der gezeigte Ablauf wiederholt sich in bestimmten Taktabständen, z.B. jede Zehntelsekunde. Auf diese Weise ist stets gewährleistet, daß einerseits stets die Befeuchtungseinrichtungen eingeschaltet sind, sofern die Sollfeuchte nicht erreicht ist, und andererseits werden die Entfeuchtungseinrichtungen betätigt, solange die Feuchtedifferenz nicht den eben noch einzuhaltenden Sicherheitsabstand zur errechneten Grenzfeuchte erreicht hat.

Die anhand der Steuerungsflußpläne geschilderten Abläufe könnte man auch als Verfahrensschritte ansehen; da es sich dabei um Schritte zur Bestimmung der richtigen Betriebsstellung der einzelnen Ent- oder Befeuchtungseinrichtungen handelt, wie damit jedoch im Ergebnis eine danach arbeitenden bzw. die dadurch zu charakterisierende Klimaanlage als solche gesehen.

Im Gesamtregelkonzept eines Kraftfahrzeuges können allerdings von der Temperaturregelung her konträre Bedingungen vorgegeben werden, die zur Feuchteregelung im Widerspruch stehen. In diesen Fällen ist vorzusehen, daß die Temperaturregelung Vorrang hat.

**Patentansprüche**

1. Klimaanlage für ein Kraftfahrzeug mit zur Entfeuchtung geeignete Einrichtungen im Luftkanal, die von einem Mikrocomputer steuerbar sind, an den von Sensoren gemessene Werte für Außentemperatur, Innentemperatur und Innenfeuchte gelangen, **dadurch gekennzeichnet,** daß der Mikrocomputer (30) aus den Werten für Außentemperatur, Innentemperatur und Innenfeuchte die Grenzfeuchte ($\phi_{grenz}$) als Verhältnis des Sättigungsdampfdrucks ($P_s$) innen an der Scheibe und des Sättigungsdampfdrucks ($P_i$) der Innenluft berechnet und, falls die Differenz ($\Delta\phi$) von Grenzfeuchte ($\phi_{grenz}$) und Innenfeuchte ($\phi_i$) einen bestimmten Wert (x) unterschreitet, die Einrichtungen (6, 9, 13) zur Entfeuchtung betätigt.

2. Klimaanlage nach Anspruch 1, dadurch gekennzeichnet, djaß der Mikrocomputer Einrichtungen zur Befeuchtung (90) betätigt, falls die Innenfeuchte ($\phi_i$) einen vorbestimmten Innenfeuchte-Sollwert ($\phi_{soll}$) um einen zweiten bestimmten Wert (x + y), der größer als der erstgenannte Wert (x) ist, unterschreitet.

3. Klimaanlage nach Anspruch 1, dadurch gekennzeichnet, daß zur Entfeuchtung die Spannung eines im Luftkanal angeordneten Gebläses (6) die Abhängigkeit von der Differenz ($\Delta\phi$) von Grenzfeuchte ($\phi_{grenz}$) und Innenfeuchte ($\phi_i$) erhöht wird.

4. Klimaanlage nach Anspruch 1 dadurch gekennzeichnet, daß zur Entfeuchtung die Entfrosterklappe (16′) des Luftkanals (1) in Abhängigkeit von der Differenz ($\Delta\phi$) von Grenzfeuchte ($\phi_{grenz}$) und Innenfeuchte ($\phi_i$) geöffnet wird.

5. Klimaanlage nach Anspruch 1 dadurch gekennzeichnet, daß zur Entfeuchtung die Temperatur eines im Luftkanal (1) angeordneten Verdampfers (9) einer im Kraftfahrzeug vorgesehenen und ferner Kompressor (10), Expansionsventil (12) und Kondensator (11) aufweisenden Kälteanlage in Abhängigkeit von der Differenz ($\Delta\phi$) von Grenzfeuchte ($\phi_{grenz}$) und Innenfeuchte ($\phi_i$) abgesenkt wird.

6. Klimaanlage nach Anspruch 1 dadurch gekennzeichnet, daß zur Entfeuchtung die Heizleistung eines im Luftkanal (1) angeordneten vom Kühlmittelkreislauf gespeisten Wärmetauschers (1 3) in Abhängigkeit von der Differenz ($\Delta\phi$) von Grenzfeuchte ($\phi_{grenz}$) und Innenfeuchte ($\phi_i$) heraufgesetzt wird.

7. Klimaanlage nach Anspruch 2, dadurch gekennzeichnet, daß zur Befeuchtung die Umluftklappen (4) am Eingang des Luftkanals (1) in Abhängigkeit der Differenz ($y_\phi$) von Innenfeuchte-Sollwert ($\phi_{soll}$) und Innenfeuchte ($\phi_i$) geöffnet werden.

8. Klimaanlage nach Anspruch 2, dadurch gekennzeichnet, daß zur Befeuchtung die Wassermenge einer Befeuchtungseinrichtung (90) in Abhängigkeit der Differenz ($y_\phi$) von Innenfeuchte-Sollwert ($\phi_{soll}$) und Innenfeuchte ($\phi_i$) bestimmt wird.

9. Klimaanlage nach Anspruch 2, dadurch gekennzeichnet, daß der Innenfeuchte-Sollwert ($\phi_{soll}$) auf maximal 50 % begrenzt wird.

10. Klimaanlage nach Anspruch 1 dadurch gekennzeichnet, daß der Sättigungsdampfdruck innen an der Scheibe in an sich bekannter Weise aus der Temperatur der Scheibe berechnet wird, und daß die Temperatur der Scheibe ($T_s$) als Funktion von Innentemperatur ($T_i$) Außentemperatur ($T_a$) und Geschwindigkeit (v) wie folgt bestimmt wird:

$$T_s = (1 - a) T_i + a T_a$$

wobei

$$a = \frac{0,359 \ v^{0,8}}{1,143 + 0,382 \ v^{0,8}}$$

für v größer oder gleich 10 km/h, und daß für v kleiner als 10 km/h a = a (v = 10 km/h) ist.

## Claims

1. An air conditioning system for a motor vehicle having in the air duct means adapted to eliminate humidity and adapted to be controlled by a microcomputer to which are fed values measured by sensors in respect of outside temperature, inside temperature and internal humidity, characterised in that from the values for outside temperature, inside temperature and internal humidity, the microcomputer (30) calculates the limit humidity ($\phi_{grenz}$) as a proportion of the saturation vapour pressure ($P_s$) on the inside of the windscreen and the saturation vapour pressure ($P_i$) of the inside air and, if the difference ($\Delta\phi$) between limit humidity ($\phi_{grenz}$) and internal humidity ($\phi_i$) falls below a specific value (x), actuates the means (6, 9, 13) of eliminating humidity.

2. An air conditioning system according to Claim 1, characterised in that if the internal humidity ($\phi_i$) falls below a desired internal humidity level ($\phi_{soll}$) by a second determined value (x + y) which is greater than the first mentioned value (x), the microcomputer actuates humidifying means (90).

3. An air conditioning system according to Claim 1, characterised in that to eliminate humidity, the voltage of a blower (6) disposed in the air duct is increased as a function of the difference ($\Delta\phi$) between the limit humidity ($\phi_{grenz}$) and the internal humidity ($\phi_i$).

4. An air conditioning system according to Claim 1, characterised in that to eliminate humidity, the defrosting flap (16') on the air duct (1) is opened as a function of the difference ($\Delta\phi$) between the limit humidity ($\phi_{grenz}$) and the internal humidity ($\phi_i$).

5. An air conditioning system according to Claim 1, characterised in that for the elimination of humidity, the temperature of an evaporator (9) of a cooling system provided in the motor vehicle and also comprising a compressor (10), expansion valve (12) and condenser (11) is reduced as a function of the difference ($\Delta\phi$) between the limit humidity ($\phi_{grenz}$) and the internal humidity ($\phi_i$).

6. An air conditioning system according to Claim 1, characterised in that for eliminating moisture the heating output of a heat exchanger (13) disposed in the air duct (1) and fed from the coolant circuit is stepped up as a function of the difference ($\Delta\phi$) between the limit humidity ($\phi_{grenz}$) and the internal humidity ($\phi_i$).

7. An air conditioning system according to Claim 2, characterised in that to provide humidity the air circulating flaps (4) at the entrance to the air duct (1) are opened as a function of the difference ($y_\phi$) between the desired internal humidity level ($\phi_{soll}$) and the internal humidity ($\phi_i$).

8. An air conditioning system according to Claim 2, characterised in that to provide humidity, the quantity of water in an humidifying means (90) is determined as a function of the difference ($y_\phi$) between the desired internal humidity level ($\phi_{soll}$) and the internal humidity ($\phi_i$).

9. An air conditioning system according to Claim 2, characterised in that the desired internal humidity level ($\phi_{soll}$) is limited to a maximum of 50%.

10. An air conditioning system according to Claim 1, characterised in that the saturation vapour pressure on the inside of the windscreen is in per se known manner calculated from the temperature of the windscreen and in that the temperature of the windscreen ($T_s$) is determined as a function of the inside temperature ($T_i$), outside temperature ($T_a$) and speed (v), as follows:

$$T_s = (1 - a) T_i + a T_a$$

in which

$$a = \frac{0.359 \ v^{0.8}}{1.143 + 0.382 \ v^{0.8}}$$

for v greater than or equal to 10 kph and in that where v is less than 10 kph a = a (v - 10 kph).

**Revendications**

1. Installation de climatisation pour véhicule automobile comprenant, dans le conduit d'air, des dispositifs appropriés pour la déshumidification commandés par un micro-ordinateur auquel sont transmises des valeurs de la température extérieure et de la température intérieure et de l'humidité intérieure, mesurées par des capteurs, caractérisée en ce que, sur la base des valeurs de la température extérieure, de la température intérieure et de l'humidité intérieure, le micro-ordinateur (30) calcule l'humidité limite ($\phi_{limite}$) représentée par le rapport liant la pression de vapeur saturée ($P_s$) sur la surface intérieure de la vitre et la pression de vapeur saturée ($P_i$) de l'air intérieur et, si la différence ($\Delta\phi$) entre l'humidité limite ($\phi_{limite}$) et l'humidité intérieure ($\phi_i$) devient inférieure à une valeur prédéterminée (x), le micro-ordinateur active les dispositifs (6, 9, 13) de déshumidification.

2. Installation de climatisation selon la revendication 1, caractérisée en ce que le micro-ordinateur active des dispositifs d'humidification (90) si l'humidité intérieure ($\phi_i$) devient inférieure d'une deuxième valeur (x + y), qui est supérieure à la valeur (x) citée en premier lieu, à une valeur de consigne prédéterminée ($\phi_{cons}$) de l'humidité intérieure.

3. Installation de climatisation selon la revendication 1, caractérisée en ce que, pour la déshumidification, on augmente la tension d'un ventilateur (6) monté dans le conduit d'air, en fonction de la différence ($\Delta\phi$) entre l'humidité limite ($\phi_{limite}$) et l'humidité intérieure ($\phi_i$).

**4.** Installation de climatisation selon la revendication 1, caractérisée en ce que, pour la déshumidification, on ouvre le volet de dégivrage (16') du conduit d'air (1) en fonction de la différence ($\Delta\phi$) entre l'humidité limite ($\phi_{limite}$) et l'humidité intérieure ($\phi_i$).

**5.** Installation de climatisation selon la revendication 1, caractérisée en ce que, pour la déshumidification, on abaisse la température d'un évaporateur (9), monté dans le conduit d'air (1), et appartenant à une installation de réfrigération prévue dans le véhicule automobile et qui comprend en outre un compresseur (10), un détendeur (12) et un condenseur (11), en fonction de la différence ($\Delta\phi$) entre l'humidité limite ($\phi_{limite}$) et l'humidité intérieure ($\phi_i$).

**6.** Installation de climatisation selon la revendication 1, caractérisée en ce que, pour la déshumidification, on élève la puissance de chauffage d'un échangeur de chaleur (13) monté dans le conduit d'air (1) et alimenté par le circuit de fluide réfrigérant, en fonction de la différence ($\Delta\phi$) entre l'humidité limite ($\phi_{limite}$) et l'humidité intérieure ($\phi_i$).

**7.** Installation de climatisation selon la revendication 2, caractérisée en ce que, pour l'humidification, on ouvre les volets (4) de recyclage de l'air situés à l'entrée du conduit d'air (1) en fonction de la différence ($y_\phi$) entre la valeur de consigne ($\phi_{cons}$) de l'humidité intérieure et l'humidité intérieure ($\phi_i$).

**8.** Installation de climatisation selon la revendication 2, caractérisée en ce que, pour l'humidification, on détermine le débit d'eau d'un dispositif d'humidification (90) en fonction de la différence ($y_\phi$) entre la valeur de consigne ($\phi_{cons}$) de l'humidité intérieure et l'humidité intérieure ($\phi_i$).

**9.** Installation de climatisation selon la revendication 2, caractérisée en ce que la valeur de consigne ($\phi_{cons}$) de l'humidité intérieure est limitée à une valeur maximale de 50 %.

**10.** Installation de climatisation selon la revendication 1, caractérisée en ce que la pression de vapeur saturée sur la surface intérieure de la vitre est calculée d'une façon connue en soi sur la base de la température de la vitre, et en ce que la température ($T_s$) de la vitre est déterminée comme suit, en fonction de la température intérieure ($T_i$), de la température extérieure ($T_a$) et de la vitesse (v)

$$T_s = (1 - a)\, T_i + a\, T_a$$

où

$$a = \frac{0{,}359\ v^{0,8}}{1{,}143 + 0{,}382\ v^{0,8}}$$

pour v supérieure ou égale à 10 km/h, tandis que, pour v inférieure à 10 km/h, on a a = a (v = 10 km/h).

FIG. 1

FIG. 2

(1)

$\Delta\varphi > x$ — 200

nein

ja

| Befeuchtung | — 201

Berechnung Sollfeuchte
$\varphi_{Soll} = \varphi_{grenz} - x - y$ — 202

203 — $\varphi_{Soll} > 50\%$ — ja

nein

$\varphi_{Soll} = 50\%$ — 204

$Y_\varphi = \varphi_{Soll} - \varphi_i$ — 205

206 — $Y_\varphi \leq 0$ — ja

nein

Befeuchtung z.B.
Öffnung Umluftklappen
$F(Y_\varphi)$ — 206

Zerstäuber Wassermenge
$f(Y_\varphi)$ — 207

Entfeuchtung z.B.
$T_V = f(Y_\varphi)$ — 208

210 — | Entfeuchtung |

211 — Öffnung Entfrosterklappe
$= f(Y_\varphi)$

212 — Spannung am Gebläse
$= f(Y_\varphi)$

213 — $T_V = f(Y_\varphi)$

214 — Heizleistung $= f(Y_\varphi)$

215 — $\Delta\varphi \leq 0$ — nein

ja

Heckscheibenheizung
Ein — 216

Ende

FIG. 3